(19) Europäisches Patentamt / European Patent Office / Office européen des brevets

(11) **EP 4 717 426 A1**

(12) **DEMANDE DE BREVET EUROPEEN**

(43) Date de publication:
**01.04.2026 Bulletin 2026/14**

(21) Numéro de dépôt: **24203231.6**

(22) Date de dépôt: **27.09.2024**

(51) Classification Internationale des Brevets (IPC):
**B29C 31/00** (2006.01)  **B29D 23/20** (2006.01)
**B29C 65/78** (2006.01)  **B29C 65/00** (2006.01)
**B29L 23/20** (2006.01)

(52) Classification Coopérative des Brevets (CPC):
**B29C 31/002;** B29C 65/7882; B29C 65/7885;
B29C 66/5344; B29C 66/8432; B29D 23/20;
B29L 2023/20

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(71) Demandeur: **Aisapack Holding SA**
**1896 Vouvry (CH)**

(72) Inventeurs:
• **STAHL, Christophe**
**1806 Saint légier La Chiésaz (CH)**
• **AEBY, Steve**
**1966 Ayent (CH)**

(74) Mandataire: **Grosfillier, Philippe**
**André Roland SA**
**IP Attorneys & Services**
**Avenue Collonges 21**
**1004 Lausanne (CH)**

(54) **DISPOSITIF DE SOUDAGE INDEXANT POUR TUBE**

(57) L'invention concerne un dispositif rotatif indexant pour la fabrication de tubes d'emballage comprenant une tourelle indexée (1) ayant un axe de rotation (2) et comprenant au moins une première piste (A) et une deuxième piste (B), chaque piste (A, B) comprenant des mandrins (3A, 3B) disposés sur la circonférence de la tourelle indexée (1) ; les mandrins (3A, 3B) opérant successivement avec des stations (4A, 4B); l'axe (2) de rotation de la tourelle (1) étant horizontal, et les pistes (A, B) ayant un écartement (7) de l'une par rapport à l'autre selon l'axe de rotation (2) de la tourelle (1) et un désalignement (6) dans le plan de rotation de la tourelle (1), ledit désalignement (6) rendant visibles toutes les stations (4A,4B) et les mandrins (3A,3B) et ledit écartement (7) permettant de minimiser l'inertie en rotation de ladite tourelle (1).

Figure 3

**Description**

Domaine de l'invention

L'invention se situe dans le domaine des dispositifs de fabrication de tubes flexibles d'emballage pour produits liquides, visqueux ou secs, et plus particulièrement dans le domaine des tubes d'emballage fabriqués par soudage. Ces tubes sont au moins constitués d'un corps de tube flexible, et d'un composant pouvant être par exemple une tête de tube, un bouchon ou un fond.

Etat de la technique

Les tubes flexibles présentent généralement au moins deux parties distinctes, à savoir une jupe ou corps cylindrique flexible reliée à un composant comportant généralement un orifice pour l'extraction du produit de l'emballage. La jupe du tube est obtenue soit par extrusion d'un corps tubulaire, soit par soudage d'une feuille multicouche. L'invention exposée ci-dessous porte notamment mais pas exclusivement sur un dispositif rotatif indexant permettant notamment les opérations d'assemblage de la jupe, de l'épaule, de l'opercule et du bouchon.

Les dispositifs rotatifs indexés pour l'assemblage de tubes opèrent par mouvements intermittents. La partie rotative du dispositif porte des mandrins qui se déplacent successivement d'une station de travail à l'autre, ce que l'on appelle l'indexage et les mandrins transportent l'emballage en cours de fabrication d'une station à l'autre, les stations travaillant en parallèle et chacune effectuant son opération dédiée en même temps. Le dispositif indexant permet ainsi d'effectuer les opérations d'assemblage dans chaque station lorsque le dispositif rotatif est à l'arrêt, ce qui est avantageux pour la précision et la simplicité du dispositif. Le cycle du dispositif rotatif indexant est divisé en un temps de rotation et un temps d'arrêt, le temps de rotation étant appelé également temps d'indexage. Lorsque la tourelle est arrêtée (pendant le temps d'arrêt) débutent alors les opérations unitaires d'assemblage dans chaque station en parallèle avec par exemple les mouvements suivants :

- Mouvement relatif d'approche entre les mandrins et les stations de travail;
- Mandrin dans la station de travail pour accomplir la tâche attribuée à la station,
- Mouvement relatif de recul entre les mandrins et les stations de travail pour permettre l'indexage, soit le mouvement de rotation qui amène les mandrins dans la station suivante prévue.

Pendant l'arrêt de la rotation de la tourelle s'effectuent en parallèle les opérations unitaires d'assemblage dans les stations, comme par exemple :

1. chargement de l'épaule de tube sur le mandrin
2. chargement de la jupe de tube sur le mandrin
3. positionnement précis de la jupe sur le mandrin
4. chauffage de la zone à souder
5. soudage de la jupe sur l'épaule
6. operculage
7. bouchonnage
8. éjection

La publication EP2021156 de l'art antérieur décrit un dispositif de soudage indexant multipistes permettant de traiter en parallèle plusieurs emballages sur la tourelle et présentant l'avantage d'une faible surface occupée au niveau du sol. Le dispositif décrit dans le document EP2021156 est illustré à la figure 1 et cette publication enseigne un positionnement vertical de l'axe 2 de la tourelle 1, ce qui est particulièrement avantageux pour traiter un grand nombre de piste en parallèle sans augmenter la surface occupée au sol. Cependant, la solution proposée complexifie l'alimentation des composants et l'évacuation des emballages. En effet, l'accès à toutes les stations impose la circulation facilitée de l'opérateur autour de la tourelle et nécessite par conséquent l'aménagement de passages d'homme qui coupent les lignes d'alimentation des composants ou d'évacuation des emballages. De plus, une inspection visuelle de toutes les stations et leur accès lors de la production n'est pas facile car toutes les stations ne sont pas visibles ni atteignable depuis une position fixe d'un opérateur.

La publication EP3016790 propose un dispositif alternatif illustré à la figure 2 et enseigne l'usage d'un axe 2 de la tourelle 1 disposé horizontalement ce qui évite les inconvénients de l'axe de tourelle vertical proposé dans la publication EP2021156 mentionnée ci-dessus. Le dispositif proposé dans la publication EP3016790 présente d'autres avantages car il permet de réduire le temps d'indexage et d'atteindre des cadences de production élevées tout en conservant un mode d'actionnement radial des mandrins 3. Le dispositif décrit dans cette publication comprend ainsi une tourelle 1 indexée d'inertie réduite permettant l'augmentation de la cadence de production par station. L'avantage de la solution proposée est l'augmentation de la cadence de production sans modification de la qualité de l'emballage produit, ni au niveau de ses performances, ni au niveau de son apparence. Cependant, le dispositif proposé dans EP3016790 présente l'inconvénient de l'absence de visibilité et d'accès aux mandrins 3 et stations lorsque plusieurs pistes sont disposées en parallèle (comme dans la publication EP2021156). Cela a pour inconvénient de diminuer la facilité des réglages et la surveillance visuelle du bon fonctionnement de la machine en production.

Exposé général de l'invention

L'invention propose d'améliorer les dispositifs indexés multipistes en trouvant le meilleur compromis entre trois critères :

- Cadence de production par mandrin, encombrement et inertie de la machine;
- Accessibilité, temps de réglage et temps de changement de configuration, surveillance visuelle de la machine en production;
- Flexibilité (possibilité de changer de procédé).

Dans des modes d'exécution, l'invention concerne un dispositif rotatif indexant pour la fabrication de tubes d'emballage comprenant une tourelle indexée ayant un axe de rotation et comprenant au moins une première piste et une deuxième piste, chaque piste comprenant des mandrins disposés sur la circonférence de la tourelle indexée, les mandrins opérant successivement avec des stations, dans lequel dispositif les pistes ont un écartement l'une par rapport à l'autre selon l'axe de rotation de la tourelle et un désalignement dans le plan de rotation de la tourelle, ledit désalignement rendant visibles toutes les stations et les mandrins et ledit écartement permettant de minimiser l'inertie en rotation de ladite tourelle.

Dans des modes d'exécution de l'invention, l'axe de rotation de la tourelle est horizontal de sorte que les stations et les mandrins sont visibles depuis la face avant du dispositif.

Dans des modes d'exécution de l'invention, l'écartement entre les pistes est compris entre 1,5 et 5 fois le diamètre maximal des mandrins, et de préférence entre 2 et 4 fois ledit diamètre maximal.

Dans des modes d'exécution de l'invention, le rapport entre le désalignement et l'écartement est compris entre 1/3 et 3, de préférence entre 1/2 et 2.

Dans des modes d'exécution de l'invention, le rapport entre le désalignement et l'écartement est égal à 1.

Dans des modes d'exécution de l'invention, les mandrins ont un mode d'actionnement radial et les stations sont fixes.

Dans des modes d'exécution de l'invention, les mandrins et les stations ont les deux un mode d'actionnement radial, de sorte que la course axiale est effectuée en partie par les mandrins et en partie par les stations.

Dans des modes d'exécution de l'invention, la course axiale est comprise entre 2 et 200mm, de préférence entre 10 et 100mm.

Dans des modes d'exécution de l'invention, la course axiale est entre 30 et 70mm.

Les revendications 9 à définissent des exemples d'opérations effectuées par les stations dans un dispositif selon l'invention.

Définition des termes utilisés dans l'exposé de l'invention

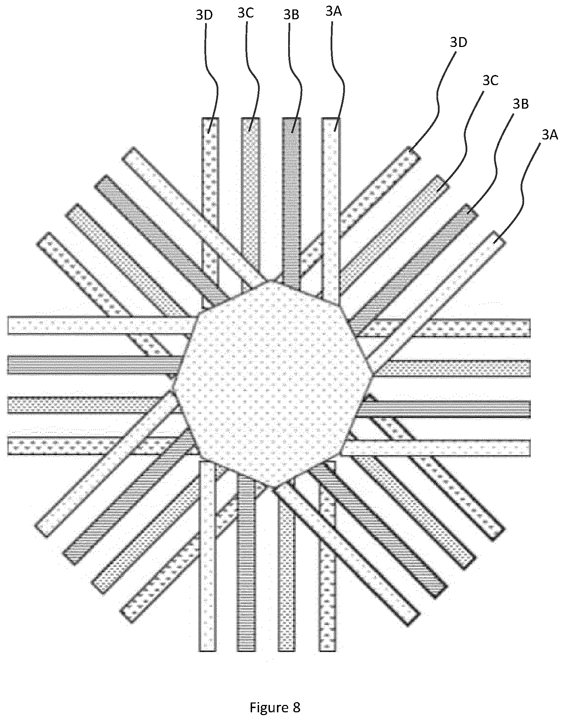

1 : tourelle indexée
2 : axe de rotation de la tourelle
3 : mandrins
3A : mandrin de la piste A
3B : mandrin de la piste B
3C et 3D: mandrins de pistes supplémentaires (voir la figure 8, principe d'un mode d'exécution à quatre pistes)
4 : stations
4A : station de la piste A
4B : station de la piste B
5 : axe du mandrin
5A : axe du mandrin de la piste A
5B : axe du mandrin de la piste B
6 : désalignement entre les pistes, c'est-à-dire la distance mesurée dans le plan de rotation entre les axes 5A, 5B des mandrins parallèles 3A, 3B des pistes A et B)
6A, 6B: désalignement partiel entre les pistes
7 : écartement entre les pistes
8 : course axiale
10 : axe angulaire correspondant aux positions d'indexage de la tourelle

L'invention présente un dispositif d'assemblage indexant pour tubes d'emballage. Ce dispositif permet notamment de réaliser par exemple les opérations successives suivantes nécessaires à la fabrication d'un tube d'emballage dans des stations successives:

1. Chargement d'un composant (par exemple une tête de tube) sur le mandrin;
2. Chargement d'un corps tubulaire sur le mandrin;
3. Positionnement précis des zones à souder du composant et du corps tubulaire;
4. Chauffage de la zone à souder du corps tubulaire et du composant;
5. Mise en pression et refroidissement au moins partiel de la soudure;
6. Operculage;
7. Bouchonnage;
8. Éjection (par exemple déchargement de l'emballage).

L'intérêt du dispositif selon la présente invention est notamment, mais non exclusivement, sa flexibilité pour réaliser différents procédés de soudage ou d'assemblage. Ainsi, sur une même tourelle 1, plusieurs procédés différents peuvent être réalisés grâce à un changement rapide des stations 4 positionnées autour de la tourelle 1. Ainsi des stations 4 de fonction différente peuvent être utilisées (soudage, clipsage, vissage, chauffage, refroidissement, chargement, déchargement, operculage, embossage, marquage, collage, étiquetage, contrôle soudure, orientation, contrôles, etc...). De plus, la position des stations 4 autour de la tourelle 1 peut être interchangée, ce qui permet de réaliser un grand nombre de procédés différents avec une même tourelle. Par exemple, avec huit stations 4 différentes autour de la tourelle 1, le nombre théorique de procédés possibles est de 120 si 5 de ces stations 4 sont interchangeables en position. Bien évidemment, tous les procédés possibles en théorie ne sont pas intéressants en pratique, mais cela permet d'illustrer l'intérêt de pouvoir interchanger la position des stations 4 et l'intérêt d'avoir un grand nombre de station 4 sur la tourelle.

Dans des modes d'exécution, l'invention concerne ainsi un dispositif rotatif indexant comprenant une tourelle indexée 1 comprenant plusieurs pistes A, B disposées sur des plans parallèles et perpendiculaires à l'axe de rotation 2 de ladite tourelle. Selon l'invention l'axe 2 de la tourelle 1 est de préférence horizontal ce qui facilite la surveillance visuelle et l'intervention de l'opérateur sur le dispositif, par exemple sur les mandrins 3 ou les stations 4. Selon des modes d'exécution de l'invention, on forme un désalignement des pistes A, B dans deux directions afin de permettre un accès visuel de chaque mandrin et une inertie en rotation réduite.

Le principe de l'invention permet de diminuer le temps d'indexage grâce à une inertie faible du dispositif. En conséquence, des cadences de production plus élevées peuvent être obtenues sans diminuer le temps nécessaire aux opérations unitaires d'assemblage.

L'invention permet d'avoir une cadence de production élevée sans diminuer le temps de soudage.

L'invention permet de produire à cadence de production élevée sans que cette cadence ait un effet sur la qualité de l'emballage produit, ni au niveau de ses performances, ni au niveau de son apparence.

En d'autres termes, l'invention concerne un dispositif qui permet de conserver un temps d'indexage réduit pour atteindre des cadences de production élevées.

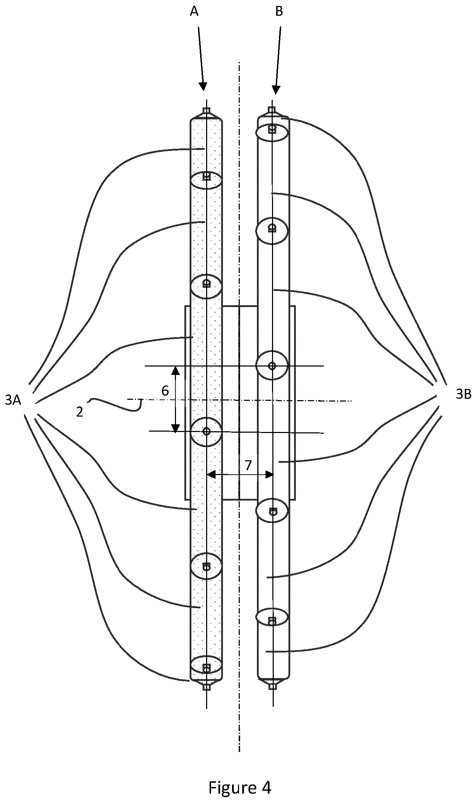

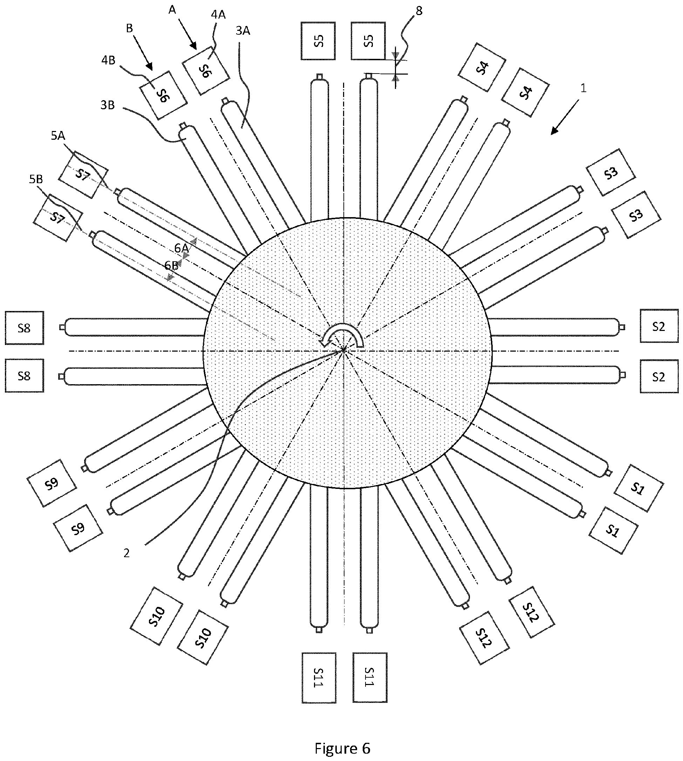

En comparaison avec un dispositif dans lequel toutes les pistes sont dans le même plan (voir la figure 6) qui présente un excellent accès à chaque station (la distance 7 entre les pistes est égale à 0, voir la figure 4), le concept selon l'invention permet de réduire l'inertie de la tourelle d'un facteur compris entre 1,5 et 15 et de préférence entre de 2,5 et 10 tout en conservant un très bon accès aux stations.

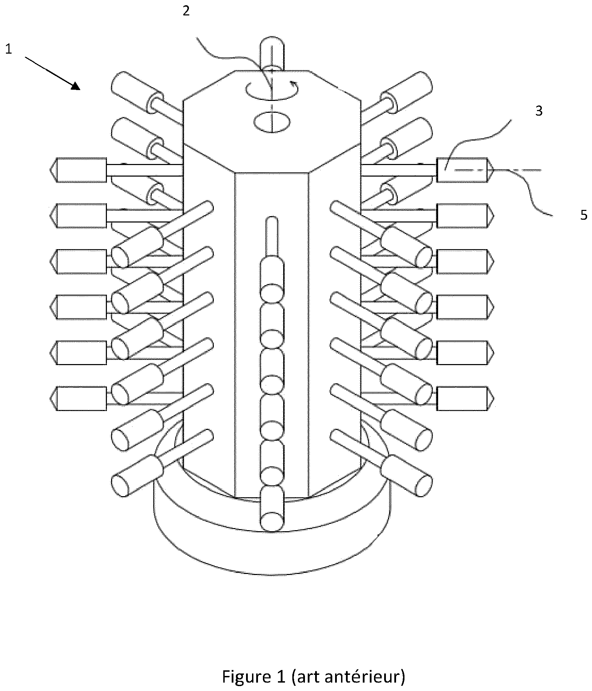

En comparaison avec un dispositif dans lequel les pistes sont parallèles et ne sont pas désalignées qui présente une inertie en rotation très réduite (le désalignement 6, voir la figure 4, entre les stations est égale à 0, voir par exemple la figure 1 où toutes les stations de chaque piste sont toutes alignées verticalement ou la construction de la figure 6 qui sera expliquée ci-dessous), le concept selon l'invention permet d'améliorer significativement l'accès aux stations tout en conservant une inertie en rotation très avantageuse.

Selon des modes d'exécution de l'invention, le désalignement 6 (voir la figure 4) entre les pistes A, B est compris entre 1,5 et 5 fois le diamètre maximal des mandrins 3A, 3B qui peuvent être utilisés sur le dispositif, et de préférence entre 2 et 4 fois le diamètre maximal des mandrins.

Selon des modes d'exécution de l'invention, l'écartement 7 entre les pistes A, B (voir la figure 4) est compris entre 1,5 et 5 fois le diamètre maximal des mandrins 3A, 3B qui peuvent être utilisés sur le dispositif, et de préférence entre 2 et 4 fois.

Selon des modes d'exécution de l'invention, le rapport entre le désalignement 6 et l'écartement 7 est compris entre 1/3 et 3, de préférence entre 1/2 et 2, et avantageusement ce rapport est égal à 1.

Afin d'optimiser l'inertie de la tourelle 1, un soin particulier est apporté pour réduire la masse des éléments de la tourelle 1 éloignés de son centre de rotation. Ainsi, une attention particulière a été apportée aux mandrins 3 situés en périphérie de la tourelle 1. Afin de réduire la masse de ces derniers, des matériaux de faible densité sont préférentiellement utilisés. Des matériaux de densité inférieure à 5 et de préférence inférieure à 3 sont utilisés comme de l'aluminium ou des matériaux composites à base de résine et de fibres. Selon l'invention, la géométrie des mandrins 1 est également optimisée en remplaçant par exemple localement une géométrie cylindrique par un profilé de rigidité équivalente mais de masse plus faible.

Selon un mode préférentiel de réalisation de l'invention, les stations 4 ont un mode d'actionnement "axial" permettant de les passer d'une "position de travail" à une "position dégagée". Dans l'exposé de l'invention, on entend par "axial", le mouvement relatif entre la station 4 et le mandrin 3 qui est effectué dans la direction de l'axe 5 du mandrin 3 quand la tourelle 1 est en position indexée. On entend également par "position de travail" la position relative entre le mandrin 3 et la station 4 en position indexée, par opposition à la "position dégagée" correspondant à la position relative entre les stations 4 et les mandrins 3 pendant l'indexage, à savoir lors de la rotation de la tourelle 1. La course axiale 8 correspond à la distance entre la position de travail et la position dégagée. L'actionnement axial des stations 4 permet de minimiser la course axiale en fonction de l'encombrement des composants et en fonction du type de station 4. L'actionnement axial des stations 4 est effectué de préférence par un servo moteur linéaire, ce qui permet un pilotage précis, rapide et répétitif. Alternativement, l'actionnement axial des stations 4 est effectué par un vérin pneumatique. L'actionnement axial est effectué de préférence individuellement par station 4, alternativement sur un groupe de stations 4 en parallèle (par exemple sur un groupe de quatre stations 4 pour une tourelle 1 comprenant quatre pistes en parallèle.

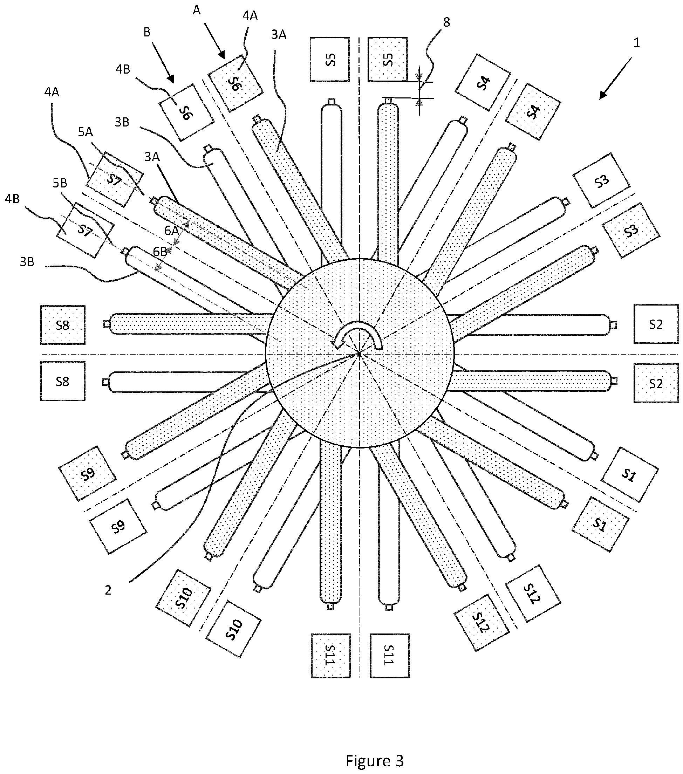

Un mode d'exécution avec quatre pistes désalignées en parallèle avec les mandrins 3A à 3D est illustré dans la figure 8: cette construction est similaire à celle illustrée dans les figures 3-5, mais avec deux pistes supplémentaires, les caractéristiques et principe du mode d'exécution à deux pistes tel que décrit dans présente demande s'appliquant de façon correspondante à ce mode d'exécution non-limitatif, le nombre de piste pouvant être différent de celui illustrés dans les modes d'exécution décrits dans la présente demande.

L'avantage du pilotage préférentiel par station 4 selon des modes d'exécution, permet par exemple, d'adapter le pilotage en fonction d'imprévus (par exemple composant manquant sur un mandrin 3).

Selon des modes d'exécution de l'invention, les mandrins 3 ont un mode d'actionnement radial et les stations 4 sont fixes tel que décrit dans la publication EP3016790. Dans cette configuration, les mandrins 3 effectuent la course axiale 8, séparant la position dégagée de la position de travail.

Selon des modes d'exécution de l'invention, les stations 4 et les mandrins 3 ont les deux un mode d'actionnement radial. Dans cette configuration, la course axiale 8 est effectuée en partie par les mandrins 3 et en partie par les stations 4. Ce mode de réalisation est particulièrement intéressant pour les opérations d'assemblage nécessitant une course axiale élevée. C'est le cas par exemple de composants dont l'encombrement selon l'axe 5 du mandrin 3 est important. Citons par exemple des dispositifs à canules ou certains systèmes de dosage.

La course axiale 8 selon l'invention est comprise entre 2 et 200mm, de préférence entre 10 et 100mm et avantageusement entre 30 et 70mm.

L'invention permet d'améliorer l'efficience du dispositif en production grâce à

- La possibilité de surveiller visuellement toutes les stations 4 depuis la face avant de la machine lorsque la machine est en production;
- L'accès facilité aux mandrins 3 et aux stations 4 depuis la face avant de la machine permettant de diminuer les temps de réglage;
- L'accès facilité aux mandrins 3 et aux stations 4 depuis la face avant de la machine permettant de diminuer les temps de maintenance;
- L'accès facilité aux mandrins 3 et aux stations 4 depuis la face avant de la machine permettant de diminuer les temps changement de configuration.

Brève description des figures

La figure 1 illustre un dispositif indexé ayant un axe de rotation vertical et décrit dans la publication EP2021156.

La figure 2 illustre un dispositif indexé ayant un axe de rotation horizontal et présentant une faible inertie en rotation et décrit dans la publication EP3016790.

La figure 3 illustre un mode d'exécution du dispositif selon l'invention selon une vue perpendiculaire à l'axe de rotation de la tourelle.

La figure 4 illustre un mode d'exécution de l'invention selon une vue parallèle à l'axe de rotation de la tourelle le dispositif illustré figure 3.

La figures 5 illustre une partie détaillée de la figure 3.

La figure 6 illustre une configuration comparative de tourelle selon une vue perpendiculaire à l'axe de rotation de ladite tourelle.

La figure 7 illustre la configuration comparative de tourelle de la figure 6 selon une vue de côté de l'axe de rotation de la tourelle.

La figure 8 illustre un mode d'exécution du dispositif selon l'invention avec quatre pistes désalignées selon le principe de l'invention.

## Exposé détaillé de l'invention

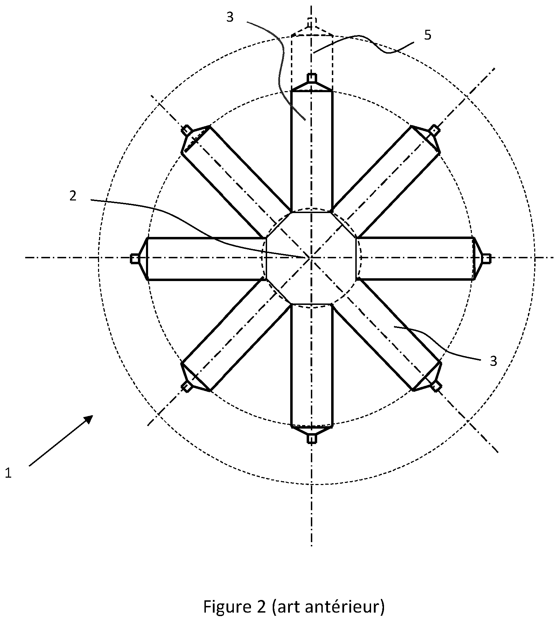

Comme indiqué ci-dessus, les figures 1 et 2 illustrent des dispositifs de l'état de la technique et il est fait référence à ces publications pour la description du fonctionnement de tels dispositifs et des inventions divulguées dans ces publications.

Le principe de l'invention selon un mode d'exécution de celle-ci est illustré dans la figure 3 qui est une vue du dispositif perpendiculairement à l'axe de rotation de la tourelle 1 sur laquelle on voit d'une part une série de mandrins 3A, 3B répartis autour la partie centrale de la tourelle 1 et des stations 4A, 4B, les références S1-S10 illustrent le fait que chaque station effectue une opération prédéterminée dans le procédé de fabrication, en face des mandrins 3A, 3B.

Par exemple, comme mentionné ci-dessus comme opérations nécessaires à la fabrication d'un tube d'emballage, les stations 4A, 4B peuvent réaliser successivement:

S1: Chargement d'un composant sur le mandrin, par exemple une tête de tube;
S2: Chargement d'un corps tubulaire sur le mandrin;
S3: Positionnement précis des zones à souder du composant et du corps tubulaire;
S4: Chauffage de la zone à souder du corps tubulaire et du composant;
S5: Mise en pression et refroidissement au moins partiel de la soudure;
S6: Operculage;
S7: Bouchonnage;
S8: Éjection.

Les stations S9 à S12 peuvent réaliser d'autres opérations en fonction du produit fabriqué, par exemple un contrôle de qualité (de préférence avant l'éjection) ou encore d'autres opérations comme mentionné dans la présente description (ajout d'une étiquette etc.).

Dans l'exemple illustré, les mandrins sont répartis sur deux pistes A et B que l'on voit sur la figure 4 (vue de côté). Sur la figure 3, cela veut dire que l'on voit au premier plan la piste A et au deuxième plan, la piste B, ce qui est illustré par la flèche représentée à gauche de la figure 4. Pour les identifier facilement, les mandrins 3A et les stations 4A de la piste A comprennent des points formant une texture.

Comme on le comprend de la figure 3, des axes angulaires 10 en traits mixtes sont illustrés tous les 30° mais les mandrins 3A et 3B ne sont pas coaxiaux avec ces axes 10 (comme dans les constructions de l'état de la technique illustrées dans les figures 1 et 2 par exemple) mais parallèles auxdits axes angulaires et donc décalés par rapport à la tourelle 1 et non pas essentiellement perpendiculaires à la surface de celle-ci comme dans les constructions illustrées dans les figures 1 et 2. Ce décalage angulaire entre les piste A et B est quantifié par le un désalignement 6 entre les piste A et B.

Comme on le voit dans la figure 3, l'axe 5A du mandrin 3A est parallèle à l'axe angulaire 10 mais avec un désalignement partiel 6A et l'axe 5B du mandrin 3B et lui aussi parallèle à l'axe angulaire 10 mais avec un désalignement partiel 6B et les stations S7 sont de chaque côté de l'axe angulaire mais alignées avec les mandrins 3A, respectivement 3B. Cette construction se répète pour chaque mandrin 3A/3B et chaque station 4A/4B de chaque piste A et B. La somme des désalignements partiels 6A et 6B est égale au désalignement 6 mentionné ci-dessus et illustré en figure 4.

Un premier effet que l'on obtient avec cette construction désalignée des pistes A et B est que, comme l'axe de rotation 2 de la tourelle 1 est horizontal, tous les mandrins 3A et 3B et les stations 4A et 4B sont visibles depuis une position de l'opérateur qui va typiquement voir la tourelle comme dans la figure 3. Ainsi, sans se déplacer, il peut surveiller tous les mandrins 3A, 3B et toutes les stations 4A, 4B sans se déplacer pendant la production et quand la tourelle 1 se déplace en rotation (indexage) selon le sens de rotation indiqué par la flèche tournante sur la tourelle 1 en figure 3.

D'autre part, les mandrins 3A et 3B sont à une certaine distance, dite course axiale 8, des stations 4A, 4B et ils sont déplacés de cette distance lorsque l'opération prévue dans la station 4A/4B est exécutée. Autrement, les mandrins 3A/3B sont retirés en direction de la tourelle 1 lors de déplacement de celle-ci ce qui diminue son rayon et par conséquent son inertie.

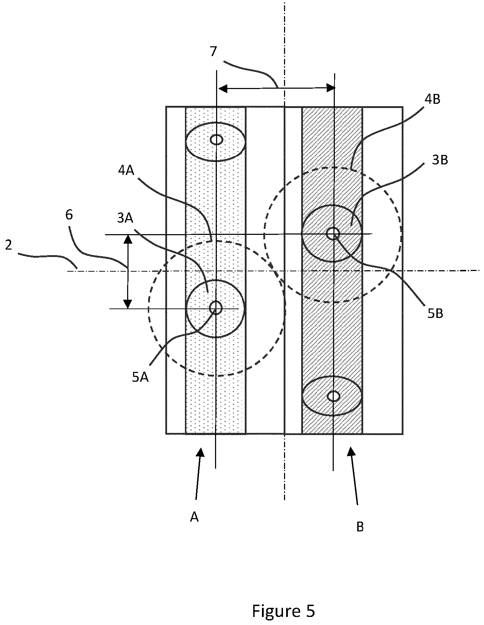

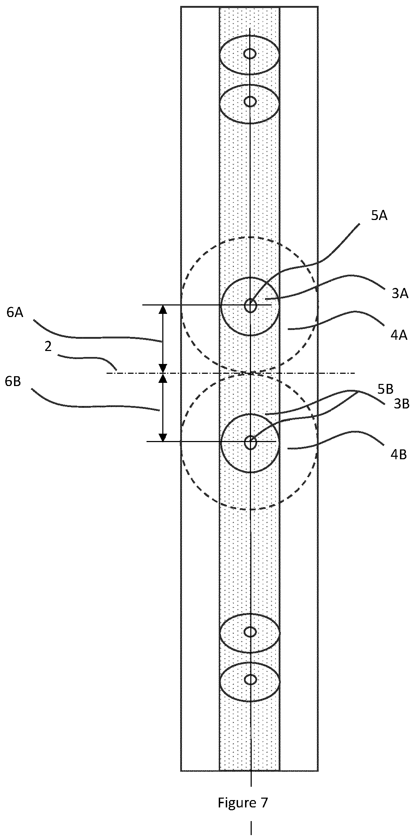

Les figures 4 et 5 illustrent des vues de côté des deux pistes A et B et montrent la position de l'extrémité des mandrins 3A, 3B et donc par conséquent la position des stations 4A, 4B que l'on voit en traits tiretés en figure 5 comme détail de construction. Du fait du désalignement 6 entre les pistes A et B, les stations 4A et 4B sont décalées et permettent une construction plus compacte des pistes A, B dans le sens de l'axe de rotation 2 par rapport à la construction dans laquelle les stations sont alignées le long de l'axe 2 (comme dans la construction de la figure 1 par exemple). De plus, cette construction avec un désalignement 6 et un écartement 5 permet également de diminuer le diamètre de la tourelle 1 avec les mandrins 3A, 3B ce qui diminue l'inertie du dispositif, comme le comprendra en considérant la construction comparative des figures 6 et 7.

Les figures 6 et 7 illustrent une construction comparative en utilisant la même vue que la figure 3 (pour la figure 6) et que la figure 4 (pour la figure 7). Dans cette construction comparative, les deux pistes A et B sont dans le même plan de rotation (la valeur de l'écartement 7 est égale à zéro). Dans cette construction, tous les mandrins 3A et 3B sont parallèles aux axes angulaires 10 avec un désalignement partiel 6A, respectivement 6B mais ils sont dans le même plan comme on le voit sur la figure 7. Cette construction permet de comparer le mode d'exécution de l'invention des figures 3 et 4 utilisant deux pistes étant à la fois désalignées et écartées avec cette construction utilisant deux pistes uniquement désalignées. Compte tenu de l'encombrement des stations 4A, 4B, la somme des distances 6A et 6B de la figure 7 est supérieure à la somme des distances 6A, 6B correspondantes de la figure 5, c'est-à-dire que le désalignement 6 de la figure 7 est supérieur au désalignement 6 de la figure 5. En conséquence, la distance entre les axes 5A et 5B des mandrins de la figure 7 est supérieure à la distance entre les axes 5A et 5B des mandrins de la figure 5 ce qui a pour résultat que le diamètre de la tourelle 1 de la figure 6 est supérieur au diamètre de la tourelle de la figure 3 et ainsi la tourelle de la figure 6 a une inertie plus grande que celle de la figure 3, avec la condition que le stations 4A, 4B et les mandrins 3A et 3B puissent être vus directement par l'opération depuis sa position. En d'autres termes, la construction selon un mode d'exécution de l'invention qui est illustrée dans les figures 3 à 5 permet de réduire l'inertie ce qui est un effet favorable et recherché.

En comparant l'inertie d'une tourelle selon la figure 6 avec un nombre N de stations sur un seul plan avec l'inertie du nouveau dispositif avec aussi N stations mais sur deux plans. On prend un exemple avec des mandrins de 63.5mm de diamètre et des stations de 170 mm de diamètre.

Dans le tableau ci-dessous, $Ratio\ inerties = \dfrac{Inertie\ tourelle\ art\ antérieur}{Inertie\ tourelle\ nouveau\ dispositif}$

| Nombre de station N | Ratio inerties |
|---|---|
| 16 | 9.5 |
| 24 | 5.6 |
| 32 | 3.1 |

Avec le dispositif selon l'invention, on peut donc réduire l'inertie de la tourelle d'un facteur compris entre 1 et 10, et de préférence entre 2 et 7.

Dans des variantes comme décrit dans la présente demande, on peut prévoir que les mandrins sont fixes selon leur axe 5A, respectivement 5B, et que ce sont les stations 4A et 4B qui se déplacent en direction des mandrins 3A, 3B. Dans d'autres variantes, à la fois les mandrins 3A, 3B et les stations 4A, 4B se déplacent les uns vers les autres lorsqu'une opération dans les stations doit être exécutée et les deux s'éloignent lors de l'indexage. Le déplacement peut être identique pour les mandrins 3A, 3B et les stations 4A, 4B (par exemple la course 8 divisée par deux) ou les déplacements peuvent différents, par exemple les éléments qui ont la plus grande inertie se déplacent moins que ceux qui ont la plus petite inertie. Un autre critère peut être l'encombrement découlant du déplacement ou la place disponible.

Les avantages de cette construction sont nombreux:

Flexibilité du dispositif : capacité à changer rapidement de procédé en changeant la position et le type de station sur la tourelle grâce à l'accès facilité aux stations.

Ci-dessous, des exemples de procédés qui peuvent être réalisés avec la construction décrite et illustrée dans la présente demande (par station S1-S12, exemples 1, 2 et 4, par station S1-S14, exemple 3, sur chaque piste) en prenant l'exemple illustratif d'un emballage formé d'un corps tubulaire et d'un composant par exemple sous forme d'une tête de tube.

Example 1:

S1 Chargement d'une tête de tube;
S2 Chargement d'un corps tubulaire;
S3 Positionnement des zones à souder;
S4 Chauffage par air chaud des zones à souder;
S5 Pression et refroidissement de la soudure;
S6 Contrôle de la soudure;
S7 Soudage d'un opercule;
S8 Prévissage d'un bouchon;
S9 Vissage d'un bouchon;
S10 Contrôle du bouchonnage;
S11 Contrôle de l'impression;
S12 Déchargement de l'emballage.

Exemple 2:

S1 Chargement d'un goulot;
S2 Chargement d'un corps tubulaire;
S3 Orientation du corps tubulaire;
S4 Soudage ultrason;
S5 Contrôle de la soudure;
S6 Soudage d'un opercule;
S7 Contrôle de la soudure;
S8 Prévissage d'un bouchon;
S9 Vissage d'un bouchon;
S10 Embossage du corps tubulaire;
S11 Contrôle de l'embossage;
S12 Déchargement de l'emballage.

Example 3:

S1 Chargement d'un bouchon;
S2 Contrôle dimensionnel du bouchon;
S3 Chargement d'un corps tubulaire;
S4 Contrôle de l'impression du corps tubulaire;
S5 Orientation angulaire du corps tubulaire;
S6 Positionnement axial des zones à souder;
S7 Chauffage par air chaud de l'interface à souder;
S8 Mise en pression de la soudure;
S9 Contrôle de la soudure;
S10 Ajout d'une étiquette d'inviolabilité;
S11 Contrôle de l'étiquetage;
S12 Impression d'un code;
S13 Contrôle de l'impression;
S14 Déchargement de l'emballage.

Exemple 4:

S1 Chargement d'une tête de tube;
S2 Chargement d'un corps tubulaire;
S3 Positionnement des zones à souder;
S4 Chauffage par air chaud des zones à souder;
S5 Pression et refroidissement de la soudure;
S6 Contrôle de la soudure;
S7 Clipsage d'une pompe;
S8 Clipsage d'un embout;
S9 Vissage d'un bouchon;
S10 Contrôle du bouchonnage;
S11 Etiquetage;
S12 Déchargement de l'emballage.

Des modes d'exécution ont été décrits pour fournir une compréhension globale des principes de la structure, de la fonction, de la fabrication et de l'utilisation des systèmes, dispositifs et procédés décrits dans la présente demande. Plusieurs de ces modes de réalisation sont illustrés dans les dessins annexés et décrits ci-dessus. Les systèmes et procédés spécifiquement décrits dans la présente demande et illustrés dans les dessins annexés sont des modes d'exécution non limitatifs de la portée de la présente invention. Les caractéristiques illustrées ou décrites en relation avec un mode d'exécution peuvent être combinées avec les caractéristiques d'autres modes d'exécution. De telles modifications et variantes sont destinées à être incluses dans la portée de la présente invention. Un certain nombre de problèmes avec les procédés et systèmes conventionnels sont notés ici et les procédés et systèmes décrits ici peuvent résoudre un ou plusieurs de ces problèmes. De plus, alors que cette invention a été décrite conjointement avec un certain nombre de modes d'exécution, les alternatives, modifications, équivalents et variantes qui sont dans l'esprit et la portée de la présente invention sont également couvertes par la présente demande.

## Revendications

1. Dispositif rotatif indexant pour la fabrication de tubes d'emballage comprenant une tourelle indexée (1) ayant un axe de rotation (2) et comprenant au moins une première piste (A) et une deuxième piste (B), chaque piste (A, B) comprenant des mandrins (3A, 3B) disposés sur la circonférence de la tourelle indexée (1) ; les mandrins (3A, 3B) opérant successivement avec des stations (4A, 4B); dispositif dans lequel
   les pistes (A, B) ont un écartement (7) de l'une par rapport à l'autre selon l'axe de rotation (2) de la tourelle (1) et un désalignement (6) dans le plan de rotation de la tourelle (1), ledit désalignement (6) rendant visibles toutes les stations (4A,4B) et les mandrins (3A,3B) et ledit écartement (7) permettant de minimiser l'inertie en rotation de ladite tourelle (1).

2. Dispositif selon la revendication 1, dans lequel l'axe (2) de rotation de la tourelle (1) est horizontal.

3. Dispositif selon la revendication 1 ou 2, dans lequel l'écartement (7) entre les pistes (A, B) est compris entre 1,5 et 5 fois le diamètre maximal des mandrins (3A, 3B), et de préférence entre 2 et 4 fois ledit diamètre maximal.

4. Dispositif selon l'une des revendications 1 à 3, dans lequel le rapport entre le désalignement (6) et l'écartement (7) est compris entre 1/3 et 3, de préférence entre 1/2 et 2,

5. Dispositif selon l'une des revendications précédentes, dans lequel le rapport entre le désalignement (6) et l'écartement (7) est égal à 1.

6. Dispositif selon l'une des revendications précédentes, dans lequel les mandrins (3A, 3B) ont un mode d'actionnement radial et les stations (4A, 4B) sont fixes.

7. Dispositif selon l'une des revendications précédentes 1 à 5, dans lequel les mandrins (3A, 3B) et les stations (4A, 4B) ont les deux un mode d'actionnement radial, de sorte que la course axiale (8) est effectuée en partie par les mandrins (3A, 3B) et en partie par les stations (4A, 4B).

8. Dispositif selon l'une des revendications précédentes, dans lequel la course axiale (8) est comprise entre 2 et 200mm, de préférence entre 10 et 100mm.

9. Dispositif selon l'une des revendications précédentes, dans lequel la course axiale (8) est entre 30 et 70mm.

10. Dispositif selon l'une des revendications précédentes, dans lequel les stations (4A,4B) effectuent les opérations suivantes:

    S1 Chargement d'une tête de tube,
    S2 Chargement d'un corps tubulaire,
    S3 Positionnement des zones à souder,
    S4 Chauffage par air chaud des zones à souder,
    S5 Pression et refroidissement de la soudure,
    S6 Contrôle de la soudure,
    S7 Soudage d'un opercule,
    S8 Prévissage d'un bouchon,
    S9 Vissage d'un bouchon,
    S10 Contrôle du bouchonnage,
    S11 Contrôle de l'impression, et
    S12 Déchargement de l'emballage.

11. Dispositif selon l'une des revendications précédentes 1 à 9, dans lequel les stations (4A,4B) effectuent les opérations suivantes:

    S1 Chargement d'un goulot,
    S2 Chargement d'un corps tubulaire,
    S3 Orientation du corps tubulaire,
    S4 Soudage ultrason,
    S5 Contrôle de la soudure,
    S6 Soudage d'un opercule,
    S7 Contrôle de la soudure,
    S8 Prévissage d'un bouchon,
    S9 Vissage d'un bouchon,
    S10 Embossage du corps tubulaire,
    S11 Contrôle de l'embossage, et
    S12 Déchargement de l'emballage.

12. Dispositif selon l'une des revendications précédentes 1 à 9, dans lequel les stations (4A,4B) effectuent les opérations suivantes:

    S1 Chargement d'un bouchon,
    S2 Contrôle dimensionnel du bouchon,
    S3 Chargement d'un corps tubulaire,
    S4 Contrôle de l'impression du corps tubulaire,
    S5 Orientation angulaire du corps tubulaire,
    S6 Positionnement axial des zones à souder,
    S7 Chauffage par air chaud de l'interface à souder,
    S8 Mise en pression de la soudure,
    S9 Contrôle de la soudure,
    S10 Ajout d'une étiquette d'inviolabilité,
    S11 Contrôle de l'étiquetage,
    S12 Impression d'un code,
    S13 Contrôle de l'impression, et
    S14 Déchargement de l'emballage.

13. Dispositif selon l'une des revendications précédentes 1 à 9, dans lequel les stations (4A,4B) effectuent les opérations suivantes:

    S1 Chargement d'une tête de tube,
    S2 Chargement d'un corps tubulaire,
    S3 Positionnement des zones à souder,

S4 Chauffage par air chaud des zones à souder,
S5 Pression et refroidissement de la soudure,
S6 Contrôle de la soudure,
S7 Clipsage d'une pompe,
S8 Clipsage d'un embout,
S9 Vissage d'un bouchon,
S10 Contrôle du bouchonnage,
S11 Etiquetage, et
S12 Déchargement de l'emballage.

Figure 1 (art antérieur)

Figure 2 (art antérieur)

Figure 3

Figure 4

Figure 5

Figure 6

Figure 7

Figure 8

**Europäisches Patentamt**
**European Patent Office**
**Office européen des brevets**

## RAPPORT DE RECHERCHE EUROPEENNE

Numéro de la demande

**EP 24 20 3231**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | EP 2 021 156 A2 (AISAPACK HOLDING SA [CH]) 11 février 2009 (2009-02-11) <br> * alinéa [0001] - alinéa [0002] * <br> * alinéa [0022] - alinéa [0028] * <br> * figures * <br> ----- | 1-13 | INV. <br> B29C31/00 <br> B29D23/20 <br><br> ADD. <br> B29C65/78 |
| A,D | EP 3 016 790 B1 (AISAPACK HOLDING SA [CH]) 13 septembre 2017 (2017-09-13) <br> * alinéa [0001] * <br> * alinéa [0031] - alinéa [0036] * <br> * figures 4-6 * <br> ----- | 1-13 | B29C65/00 <br> B29L23/20 |
| A | US 2001/048953 A1 (KIERAS RONALD E [US] ET AL) 6 décembre 2001 (2001-12-06) <br> * alinéa [0002] * <br> * alinéa [0270] - alinéa [0272] * <br> * figures 46,47 * <br> ----- | 1-13 | |

**DOMAINES TECHNIQUES RECHERCHES (IPC)**

B29C
B29D
B29L

Le présent rapport a été établi pour toutes les revendications

| Lieu de la recherche | Date d'achèvement de la recherche | Examinateur |
|---|---|---|
| La Haye | 17 février 2025 | Fageot, Philippe |

EPO FORM 1503 03.82 (P04C02)

**EP 4 717 426 A1**

## ANNEXE AU RAPPORT DE RECHERCHE EUROPEENNE
## RELATIF A LA DEMANDE DE BREVET EUROPEEN NO.

EP 24 20 3231

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-02-2025

| Document brevet cité au rapport de recherche | | Date de publication | Membre(s) de la famille de brevet(s) | | Date de publication |
|---|---|---|---|---|---|
| EP 2021156 | A2 | 11-02-2009 | EP | 2021156 A2 | 11-02-2009 |
| | | | ES | 2480090 T3 | 25-07-2014 |
| | | | HK | 1131588 A1 | 29-01-2010 |
| | | | WO | 2007141711 A2 | 13-12-2007 |
| EP 3016790 | B1 | 13-09-2017 | BR | 112015032898 B1 | 13-04-2021 |
| | | | CA | 2917154 A1 | 08-01-2015 |
| | | | CN | 105451953 A | 30-03-2016 |
| | | | EP | 2821197 A1 | 07-01-2015 |
| | | | EP | 3016790 A2 | 11-05-2016 |
| | | | ES | 2644006 T3 | 27-11-2017 |
| | | | HK | 1216517 A1 | 18-11-2016 |
| | | | JP | 6422960 B2 | 14-11-2018 |
| | | | JP | 2016530122 A | 29-09-2016 |
| | | | KR | 20160040543 A | 14-04-2016 |
| | | | MX | 367354 B | 15-08-2019 |
| | | | RU | 2016101546 A | 08-08-2017 |
| | | | US | 2016176106 A1 | 23-06-2016 |
| | | | WO | 2015001453 A2 | 08-01-2015 |
| US 2001048953 | A1 | 06-12-2001 | AUCUN | | |

EPO FORM P0460

Pour tout renseignement concernant cette annexe : voir Journal Officiel de l'Office européen des brevets, No.12/82

# EP 4 717 426 A1

## RÉFÉRENCES CITÉES DANS LA DESCRIPTION

**Documents brevets cités dans la description**

- EP 2021156 A

- EP 3016790 A